# EUROPEAN PATENT APPLICATION

(11) **EP 4 194 371 A1**
(43) Date of publication of application: **14.06.2023**
(21) Application number: 22211026.4
(22) Date of filing: 02.12.2022
(51) Int. Cl.: B65G 17/32, B23Q 7/14

(54) **CONVEYING EQUIPMENT FOR HOLDING AND TRANSPORTING A CONTAINER**

(30) Priority: 09.12.2021 IT 202100030899
(71) Applicant: Azionaria Costruzioni Macchine Automatiche A.C.M.A. S.p.A., 40131 Bologna (IT)
(72) Inventor: MATRA', Luca, I-40131 BOLOGNA (BO) (IT); RIGHETTI, Marco, I-40131 BOLOGNA (BO) (IT)
(74) Representative: Porta & Consulenti Associati S.p.A.

(57) **Abstract**

A conveying equipment (10) for holding and transporting a container, comprises a support base (22) for a container and holding devices (13) movable along respective gripping directions (D1, D2) between a retracted position and an advanced position. Each holding device (13) comprises a plurality of restraining bodies (14) placed one above the other, wherein each restraining body (14) of a respective holding device (13) is separated from an underlying restraining body (14) by a separating volume (15). Each restraining body (14) comprises a contact element (21) adapted to be resiliently deformed and configured to conform at least partially to a portion of the outer surface of a container. Restraining bodies (14) of a first holding device (13) are at least partially received, at least in the respective advanced position, in respective separating volumes (15) of a second holding device (13).

## Description

The present invention refers to a conveying equipment for holding and transporting a container for a product according to a predetermined orientation to allow filling, capping, labelling and/or other processing on the container while the conveying equipment and the container are moving along an automated line.

Conveying equipment, also known as "puck" or "puck carrier", is typically used in automated production lines to hold and transport containers in a desired orientation, for example to hold containers in a vertical position.

Conveying equipment is usually inserted in a path of an automated production line and each piece of equipment is associated with a respective container which is held by the conveying equipment.

The conveying equipment with the container travels along the path of the automated production line and crosses one or more processing stations where different operations are performed, during which for example the container can be filled with one or more materials, the container can be subjected to pre-filling and/or post-filling procedures or treatments, the container can be closed with a cap affixed thereto, one or more labels can be applied to the container and many other operations. When some or all of the processing have been completed, the conveying equipment and the container are moved to an exit area, the container is removed from the conveying equipment, and the conveying equipment is redirected to an entry area to receive a new container and start over with the path of the automated production line.

Typically, dozens or hundreds of conveying equipment may be simultaneously present and in use along an automated production line.

The Applicant has noted that in cases where an automated production line is used, at least in different production cycles, to carry out operations on containers having different shapes and sizes from one another, the fact of having conveying equipment adaptable for use with containers of different shapes and sizes can be advantageous in terms of reducing machine downtimes necessary for the changeover of conveying equipment and of reducing the sizes of the storage units for storing conveying equipment, with consequent reductions in production costs.

Document EP0501372A2 describes a container carrier that can be used with a variety of containers. Pairs of container carrying elements are arranged inside a supporting body that accommodates a container. A pair of holding elements are arranged facing each other within the supporting body. The holding elements are stressed from the outside to be movable towards the centre, and are retractable towards the outside of the supporting body. All container holding elements are brought to an outwardly retracted initial position and are then guided to advance to a position where they conform to a container pattern that is inserted centrally within the supporting body.

Document US4159762A describes an apparatus for transferring containers of different sizes along a predetermined path comprising a housing, gripping means comprising a pair of first and second gripping elements, which is connected to said housing which are movable between a gripping position in which a container is firmly and positively grasped, and a non-gripping position in which the container can be freely shifted between said gripping elements. Each of the gripping elements is defined by a plate having a central section and a pair of angularly oriented flat plate portions. The opposite pairs of angularly oriented flat plate portions have a plurality of projections and notches formed along their outer edges. The notches are arranged such that the notches of a pair of plate portions receive the projections of the opposite pair of plate portions.

The Applicant has verified that conveying equipment of the type described in EP0501372A2 and of the type described in US4159762A can be reconfigured and reused on the same automated production line following a change in the production cycle.

However, the Applicant has noted that should the size of the containers vary considerably as a result of a change in the production cycle, the conveying equipment of the type described in EP0501372A2 may have some difficulty in correctly holding the containers.

The Applicant has in fact verified that if the holding elements are sized to hold a first container they may not be able to grasp a second, much smaller-sized container. In particular, if the maximum size of the second container is less than the minimum distance of approach of the pairs of holding elements, the holding elements of a pair of holding elements would interfere with the holding elements of the other pair of holding elements during the mutual approach before being able to grasp the second container. Conversely, if the holding elements are sized to grasp the smaller-sized container, the portions of the holding elements that contact the larger-sized container may be so small that they fail to properly hold the larger-sized container.

The Applicant has further noted that although the conveying equipment of the type described in US4159762A may be exempt from the above cited inconvenience, such type of conveying equipment may have some difficulty in correctly holding containers of different shape following a change in the production cycle.

The Applicant has in fact verified that if the plates of each gripping element having a central section and a pair of angularly oriented flat plate portions are shaped to enclose a cylindrical side surface of a container, a container having a substantially flat side surface might not be effectively contacted and held by the gripping elements. Conversely, if the plates of each gripping element having a central section and a pair of angularly oriented flat plate portions are shaped to enclose a substantially flat side surface of a container, a container having a cylindrical side surface might not be effectively contacted and held by the gripping elements.

The Applicant has therefore felt the need to provide a conveying equipment for holding and transporting a container that allows holding and transporting containers of both different shape and different size at least following a change in the production cycle.

The Applicant has perceived that in order to hold and transport containers of both different shape and different size, the conveying equipment should be able to have holding devices that, even in the case of containers with shapes and sizes different from one another, have gripping surfaces that are always able to surround the outer surface of the containers adapting to it.

The Applicant has realised that in order to be able to surround both relatively large-sized containers and relatively small-sized containers, the gripping surfaces of such holding devices should be able to increase their extension when a relatively large-sized container needs to be held and should be able to decrease their extension when a relatively small-sized container needs to be held.

The Applicant also realised that in order to adapt to the outer surface of the container to be held, such gripping surfaces of the holding devices should be able to deform substantially equally both when a relatively large-sized container is to be held and when a relatively small-sized container is to be held.

The Applicant has therefore found that by providing holding devices equipped with contact elements configured to come into contact with the outer surface of a container and adapted to be resiliently deformed to conform at least partially to said outer surface of the container, and by arranging said contact elements on overlapped arrays like the teeth of a comb, it is possible to move the holding devices towards each other in such a way that the overlapped arrays of a holding device interpenetrate with the overlapped arrays of another holding device, so that the contact elements are always able to surround and conform to the outer surface of the container substantially regardless of its shape and size.

The present invention therefore concerns a conveying equipment for holding and transporting a container.

Preferably, a support base for a container is provided.

Preferably, there are provided holding devices movable along respective gripping directions between a retracted position and an advanced position.

Preferably, each holding device comprises a plurality of restraining bodies placed one above the other, wherein each restraining body of a respective holding device is separated from an underlying restraining body by a separating volume.

Preferably, each restraining body comprises a contact element adapted to be resiliently deformed and configured to conform at least partially to an outer surface portion of a container.

Preferably, restraining bodies of a first holding device of said holding devices are received, at least in the respective advanced position, in respective separating volumes of a second holding device of said holding devices.

The term "adapted to be resiliently deformed" means, in the present description and in the subsequent claims, a material capable of changing its shape following a force acting on it and of recovering its original shape when the force acting on it ceases. An example of a material adapted to be resiliently deformed is rubber.

The term "vertical" means, in the present description and in the subsequent claims, a magnitude or an extension measured along a direction that extends substantially parallel to a container placed on the support base of the conveying equipment.

The term "horizontal" means, in the present description and in the subsequent claims, a magnitude or an extension measured along a plane perpendicular to a vertical direction. By way of example, the support base of the conveying equipment lies in a horizontal plane.

The contact elements, being adapted to be resiliently deformed and configured to conform at least partially to a portion of the outer surface of a container, are able to adapt to the outer surface of a container both in the case of the latter having continuous and rounded surfaces (such as in the case of a substantially cylindrical container), and in the case of the latter having flat surfaces (such as in the case of a substantially prismatic container), as well as in the case of the latter having additional surface shapes.

The Applicant has found that by arranging restraining bodies of a holding device in respective separating volumes of another holding device, the contact elements of each holding device decrease their extension during the mutual approach.

In this way, the contact elements decrease their useful extension to come into contact with the outer surface of the container during the approach of the holding devices, since the portions of contact elements that are being placed in the separating volumes are no longer available to contact the outer surface of the container.

Thus, the contact elements have a maximum extension when the holding devices are in the position of maximum mutual distancing, a configuration in which the maximum-sized container can be held, and a minimum extension when the holding devices are in the position of minimum mutual distancing, a configuration in which the minimum-sized container can be held.

By sizing the holding devices, the restraining bodies and the contact elements based on the maximum size and the minimum size of the container to be transported along the automated production line, it is possible to use the same conveying equipment for any container to be transported along the automated production line.

The present invention may exhibit at least one of the preferred features described below. These characteristics may therefore be present individually or in combination with each other, unless expressly stated otherwise.

Preferably, the restraining bodies of the holding devices are arranged parallel to each other.

Preferably, the restraining bodies of the holding devices have two main development sizes with respect to a third development size; said two main development sizes of each restraining body define a respective reference plane.

Preferably, the reference planes of the restraining bodies are horizontal planes.

Preferably, the reference planes of the restraining bodies are parallel to each other.

Preferably, each restraining body comprises a rigid supporting element to which a respective contact element is stably connected.

Preferably, the rigid supporting elements are made of a material having a Young's modulus at least 300 times greater than the Young's modulus of the material with which the contact elements are made.

Preferably, the rigid supporting elements of each restraining body are connected to each other by a strut; each strut being constrained to a rear portion of each respective rigid supporting element.

Preferably, each strut vertically separates the rigid supporting elements from each other so as to define said separating volume between a restraining body and an underlying restraining body of a holding device.

Preferably, each strut has a main development direction substantially perpendicular to the restraining bodies connected by it.

Preferably, each strut has a main development direction substantially perpendicular to the reference planes of the restraining bodies connected by it.

Preferably, each strut has a main development direction oriented vertically.

Preferably, the extension of the rear portion of the rigid supporting elements, measured along a (horizontal) direction substantially perpendicular to the main development direction of the strut connecting said rigid supporting elements, is greater than the extension of the strut measured along the same (horizontal) direction.

Preferably, the extension of the rear portion of the rigid supporting elements, measured along a (horizontal) direction substantially perpendicular to the main development direction of the strut connecting said rigid supporting elements, is at least four times greater than the extension of the strut measured along the same (horizontal) direction.

Preferably, each contact element of the restraining bodies comprises an elastic strip.

Preferably, each elastic strip is made of a material having a Young's modulus of less than 0.5 GPa, more preferably less than 0.1 GPa, for example less than 0.01 GPa.

Preferably, each rigid supporting element comprises a rear portion and two side portions connected to the rear portion and delimiting a front opening for the rigid supporting element; said elastic strip being connected to said side portions and extending at the front opening.

Preferably, said front opening for the rigid supporting element faces a container to be held, so that said container is directly contacted by the elastic strip of a respective restraining body.

Preferably, the front openings for the rigid supporting elements of the same restraining body are superimposed on each other and aligned vertically.

Preferably, each elastic strip is wrapped in a loop around the rear portion and the side portions of a respective rigid supporting element.

Preferably, said holding devices comprise a first pair of holding devices movable along a first gripping direction and a second pair of holding devices movable along a second gripping direction.

Preferably, the first pair of holding devices is movable along the first gripping direction between the retracted position in which the holding devices of the first pair of holding devices are moved away from each other and away from the support base and the advanced position in which the holding devices of the first pair of holding devices are moved towards each other and towards the support base.

Preferably, the second pair of holding devices is movable along the second gripping direction between the retracted position in which the holding devices of the second pair of holding devices are moved away from each other and away from the support base and the advanced position in which the holding devices of the second pair of holding devices are moved towards each other and towards the support base.

Preferably, the first gripping direction is perpendicular to the second gripping direction.

Preferably, the first gripping direction and the second gripping direction lie in a horizontal plane.

Preferably, restraining bodies of the first pair of holding devices are at least partially received, at least in the respective advanced position, in separating volumes of the second pair of holding devices and restraining bodies of the second pair of holding devices are at least partially received, at least in the respective advanced position, in separating volumes of the first pair of holding devices.

Preferably, the restraining bodies of a first holding device of the first pair of holding devices are not insertable into separating volumes of the restraining bodies of a second holding device of the first pair of holding devices.

Preferably, the restraining bodies of a first holding device of the second pair of holding devices are not insertable into separating volumes of the restraining bodies of a second holding device of the second pair of holding devices.

Preferably, each restraining body of a first holding device of the first pair of holding devices is coplanar with a restraining body of a second holding device of the first pair of holding devices.

Preferably, each restraining body of a first holding device of the second pair of holding devices is coplanar with a restraining body of a second holding device of the second pair of holding devices.

Preferably, the restraining bodies of the first pair of holding devices lie on offset planes with respect to the planes on which the restraining bodies of the second pair of holding devices lie.

Preferably, the holding devices of the first pair of holding devices are arranged symmetrically with respect to said support base and the holding devices of the second pair of holding devices are arranged symmetrically with respect to said support base.

Preferably, each holding device comprises a slide slidingly mounted on a rail for moving along the respective gripping direction.

Preferably, for each holding device a driving device active on said slide for moving the slide along said rail is provided.

Preferably, each driving device is actuatable independently of the other driving devices.

Preferably, each driving device comprises a pusher configured to permanently generate a thrust force on said slide directed towards the advanced position of the respective holding device.

Preferably, the thrust force generated by said pusher places the holding devices in a position of maximum advancement.

Preferably, in the position of maximum advancement, the holding devices of the first pair of holding devices are placed at the minimum mutual distance.

Preferably, in the position of maximum advancement, the holding devices of the second pair of holding devices are placed at the minimum mutual distance.

Preferably, said pusher is a spring.

Preferably, said driving device comprises an actuator comprising a dragging portion connected to the slide to transmit to the slide a dragging force directed towards the retracted position of the holding device.

Preferably, said actuator is configured to counteract the thrust force generated by the pusher.

Preferably, said actuator is further configured to transmit the thrust force generated by the pusher to the slide.

Preferably, said dragging force is directed in the opposite direction with respect to said thrust force.

Preferably, said dragging portion is connected to the slide to transmit to the slide also the thrust force generated by the pusher.

Preferably, when the thrust force is greater than the dragging force, said dragging portion moves said slide towards the advanced position of the holding device.

Preferably, when the thrust force is less than the dragging force, said dragging portion moves said slide towards the retracted position of the holding device.

Preferably, said dragging portion of the actuator comprises a slider inserted between two shoulders of the slide; said slider exerting said dragging force on a first shoulder of said two shoulders.

Preferably, said slider is configured to exert said thrust force on a second shoulder of said two shoulders.

Preferably, said actuator comprises an actuation portion configured to receive an actuation force and a transmission portion configured to transfer the actuation force to the dragging portion and generate said dragging force.

Preferably, said actuation portion is configured to receive an actuation force exerted by an entity external to the conveying equipment, such as for example an operator or an actuation arm of an actuation device or the like.

Preferably, said transmission portion is interposed between the actuation portion and the dragging portion and is hinged about a rotation axis to rotate the actuation portion about said rotation axis.

Preferably, said actuation force causes a rotation in a first angular direction of the actuation portion about said rotation axis.

Preferably, the rotation of the actuation portion in said first angular direction pushes said slider against said first shoulder of the slide.

Preferably, said transmission portion of the driving body is connected to said pusher in such a way as to transmit the actuation force to the dragging portion in contrast to the thrust force generated by said pusher or to transmit the thrust force generated by said pusher to the dragging portion.

Preferably, said pusher is connected to a rack geared to a gear wheel, wherein said gear wheel is rotatable about said rotation axis.

Preferably, a rotation in said first angular direction of the actuation portion about said rotation axis causes a rotation in the same angular direction of said gear wheel and a translation of said rack directed towards the retracted position of the respective holding device.

Preferably, said translation of said rack directed towards the retracted position of the respective holding device is actuated in contrast to said thrust force.

Preferably, said translation of said rack directed towards the retracted position of the respective holding device causes a compression of said spring.

Further characteristics and advantages of the present invention will become clearer from the following detailed description of a preferred embodiment thereof, with reference to the appended drawings and provided by way of indicative and non-limiting example, in which:
- Figure 1 is a perspective view of a conveying equipment for holding and transporting a container in accordance with the present invention in a first condition;
- Figure 2 is a perspective view of the equipment of Figure 1 in a second condition and with some parts removed to better highlight others;
- Figure 3 is a side view of the equipment of Figure 2;
- Figure 4 is a perspective view of a detail of the equipment of Figure 1; and
- Figure 5 is a perspective view of a component of a detail of the equipment of Figure 4.

A conveying equipment for holding and transporting a container in accordance with the present invention has been indicated as a whole with reference numeral 10.

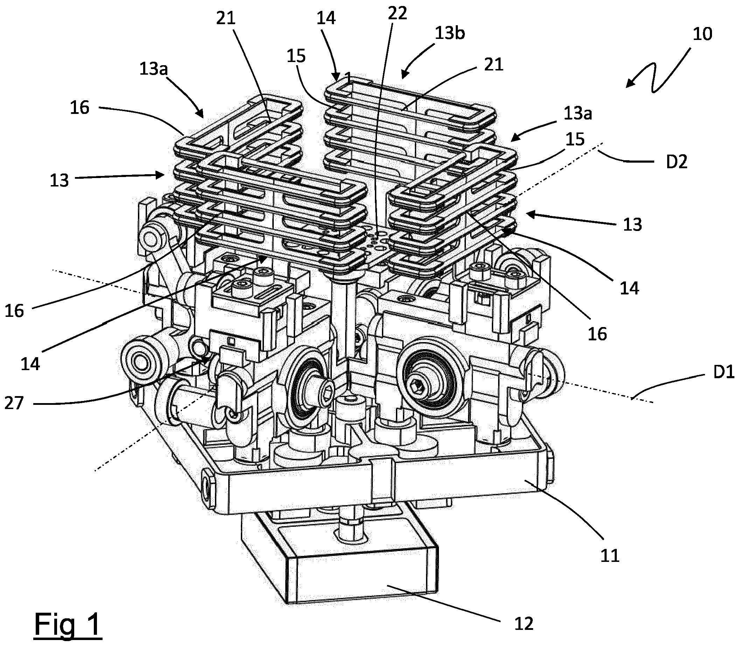

As shown in Figure 1, the equipment 10 comprises a supporting frame 11 to which a carriage 12 configured to be inserted in a track of a path of an automated production line is connected. The carriage 12 may move autonomously along the track or may move drivingly to follow the track.

In the event that the carriage 12 is autonomously movable, the carriage 12 may comprise power supply members (not illustrated) connected to drive wheels (not illustrated) of the carriage 12. Such electrical movement parts may for example comprise an electric motor powered by rechargeable batteries contained in the carriage 12 or powered directly by the track of the path of the automated production line. In the event that the carriage 12 is not autonomously movable, the track may comprise a plurality of housing seats for the carriage 12 that move along the track by driving the carriage 12 into motion.

Holding devices 13 configured to hold a container (not illustrated) during the movement of the equipment 10 along the track of the path of the automated production line are mounted on the supporting frame 11, on the opposite side with respect to the carriage 12.

Each holding device 13 comprises a plurality of restraining bodies 14 placed one above the other in a vertical direction. The restraining bodies 14 are vertically superimposed and aligned with each other.

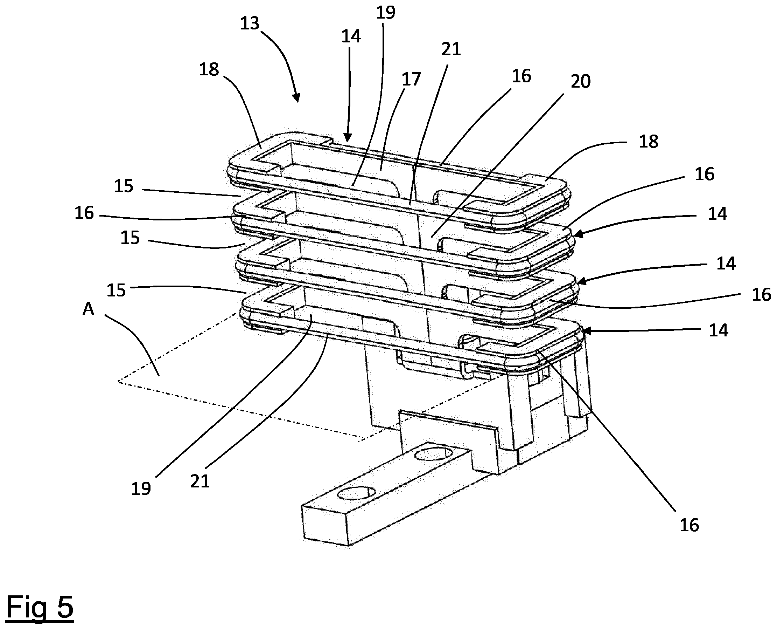

As better shown in Figure 5, the restraining bodies 14 of the same holding device 13 are separated from each other in a vertical direction so as to define a separating volume 15 between them. The separating volumes 15 are in number equal to the number of the restraining bodies 14 decreased by one. The separating volumes 15 are sized so as to be able to accommodate a restraining body 14. The distance in the vertical direction separating two overlapped and adjacent restraining bodies 14 is greater than the extent in the vertical direction of a restraining body 14.

The number of restraining bodies 14 of a holding device 13 is comprised between 2 and 20, preferably comprised between 2 and 10, more preferably comprised between 3 and 8. In the illustrated embodiment, four restraining bodies 14 and three separating volumes 15 are provided for each holding device 13.

As shown in Figure 5, each restraining body 14 comprises a rigid supporting element 16 having a rear portion 17, two side portions 18 and a front opening 19. The two side portions 18 are placed at opposite ends of the rear portion 17. The front opening 19 is opposite the rear portion 17 and is developed between the two side portions 18. The two side portions 18 space apart in horizontal direction the rear portion 17 from the front opening 19. Each restraining body 14 has a substantially C shape.

As illustrated in Figure 5, the restraining bodies 14 of a holding device 13 have two main development sizes with respect to a third development size. The two main development sizes are defined, respectively, by the extension in horizontal direction of the rear portion 17 and by the extension in horizontal direction of the side portions 18. The third development size is defined by the extension in vertical direction of the rear portion 17 and of the side portions 18. The two main development sizes of each restraining body 14 define a respective horizontal reference plane A.

The rigid supporting elements 16 are made of plastic material or metal material.

The rigid supporting elements 16 of each restraining body 14 are connected to each other by a strut 20 to constrain the rigid supporting elements 16 to each other and to keep them vertically separated. The strut 20 has a main development direction directed vertically and substantially perpendicular to the reference planes A.

As shown in Figure 5, the strut 20 is connected to the rear portion 17 of the rigid supporting elements 16, such that the rigid supporting elements 16 project in a horizontal direction from the strut 20 forming a plurality of shelves.

The strut 20 has an extension in a horizontal direction smaller than the extension in the same direction of the rear portion 17 of the rigid supporting elements 16. In the illustrated embodiment, the strut 20 has an extension in the horizontal direction about 6 times less than the extension in the same direction of the rear portion 17 of the rigid supporting elements 16.

The strut 20 may be one piece with the rigid supporting elements 16 or it may be a distinct element rigidly connected to the rigid supporting elements 16.

Each restraining body 14 comprises a contact element 21 adapted to be resiliently deformed when pressed against a container to be transported. The contact element 21 can be made of rubber or of an elastomeric material in such a way that it can deform when a force acts on it and recover its original shape when this force is stopped.

A respective contact element 21 is provided for each restraining body 14. The contact element 21 is positioned at the front opening 19 of the respective rigid supporting element 16, as illustrated in Figure 5.

The extension in vertical direction of each contact element 21 is substantially equal to the extension in vertical direction of the respective rigid supporting element, such that the extension in vertical direction of the restraining bodies 14 is less than the extension in vertical direction of the separating volumes 15.

The contact element 21 is wrapped in a closed loop on the rigid supporting element 16 so as to contact the rear portion 17, the two side portions 18 and extend between the two side portions 18 at the front opening 19. The contact element 21 comprises, or is defined by, an elastic strip.

As shown in Figure 1, the equipment comprises a support base 22 for the container to be transported.

The front opening 19 of each rigid supporting element 16 of each restraining body 14 of each holding device 13 faces, i.e. turned towards, the support base 22.

The support base 22 is connected to the supporting frame 11 and extends vertically away from the supporting frame 11. The support base 22 has a support surface 22a that lies in a horizontal plane.

As shown in Figure 1, a first pair 13a of holding devices 13 and a second pair 13b of holding devices 13 are provided.

The holding devices 13 of the first pair 13a of holding devices 13 are facing each other and separated from the support base 22. The holding devices 13 of the second pair 13b of holding devices 13 are facing each other and separated from the support base 22.

Each restraining body 14 of one of the two holding devices 13 of the first pair 13a of holding devices 13 corresponds to a restraining body 14 of the other holding device 13 of the first pair 13a of holding devices 13. Each restraining body 14 of one of the two holding devices 13 of the first pair 13a of holding devices 13 lies on the same reference plane A of the corresponding restraining body 14 of the other holding device 13 of the first pair 13a of holding devices 13.

Each restraining body 14 of one of the two holding devices 13 of the second pair 13b of holding devices 13 corresponds to a restraining body 14 of the other holding device 13 of the second pair 13b of holding devices 13. Each restraining body 14 of one of the two holding devices 13 of the second pair 13b of holding devices 13 lies on the same reference plane A of the corresponding restraining body 14 of the other holding device 13 of the second pair 13b of holding devices 13.

The reference planes A on which the restraining bodies 14 of the first pair 13a of holding devices 13 lie are parallel and offset with respect to the reference planes A on which the restraining bodies 14 of the second pair 13b of holding devices 13 lie.

The reference planes A on which the restraining bodies 14 of the first pair 13a of holding devices 13 lie are alternated with the reference planes A on which the restraining bodies 14 of the second pair 13b of holding devices 13 lie.

The reference planes A on which the restraining bodies 14 of the first pair 13a of holding devices 13 lie are substantially aligned with the separating volumes 15 between the restraining bodies 14 of the second pair 13b of holding devices 13.

The reference planes A on which the restraining bodies 14 of the second pair 13b of holding devices 13 lie are substantially aligned with the separating volumes 15 between the restraining bodies 14 of the first pair 13b of holding devices 13.

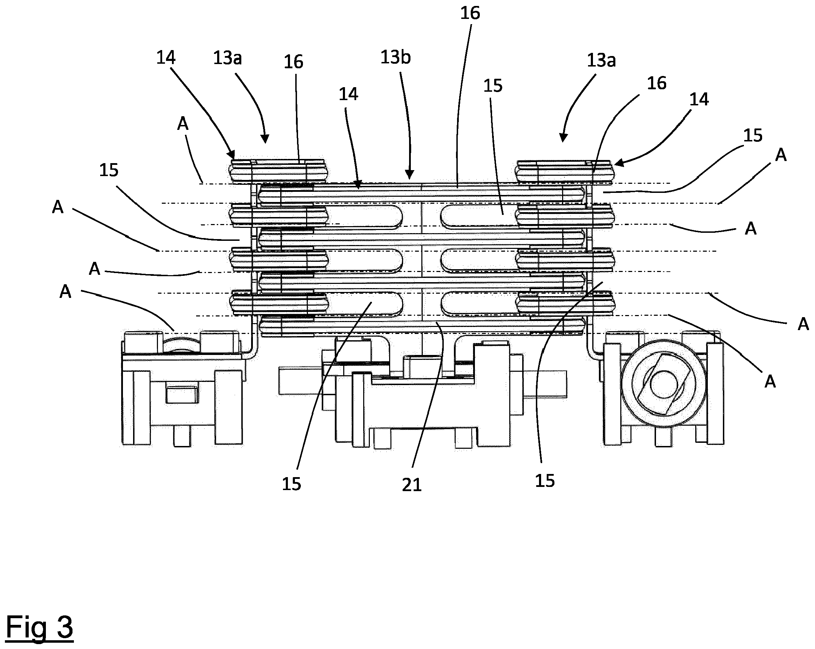

As shown in Figure 3, proceeding in a vertical direction away from the supporting frame 11, one first encounters the reference plane A on which two corresponding restraining bodies 14 of the second pair 13b of holding devices 13 lie, followed by the reference plane A on which two corresponding restraining bodies 14 of the first pair 13a of holding devices 13 lie. This alternation goes on for all reference planes A of the restraining bodies 14 of the first pair 13a and of the second pair 13b of holding devices 13.

The restraining bodies 14 of the first pair of holding devices 13 are movable along a first gripping direction D1 and the restraining bodies 14 of the second pair of holding devices 13 are movable along a second gripping direction D2.

The first gripping direction D1 is a rectilinear direction, the second gripping direction D2 is a rectilinear direction, and the first gripping direction D1 is substantially orthogonal to the second gripping direction D2. The first gripping direction D1 and the second gripping direction D2 lie on the same horizontal plane.

Each restraining body 14 is movable along the respective gripping direction between a retracted position and an advanced position.

In the retracted position, the restraining bodies 14 of the first pair 13a of holding devices 13 are moved away from each other and in the advanced position the restraining bodies 14 of the first pair 13a of holding devices 13 are moved towards each other.

In the advanced position, the restraining bodies 14 of the second pair 13b of holding devices 13 are moved away from each other and in the advanced position the restraining bodies 14 of the second pair 13b of holding devices 13 are moved towards each other.

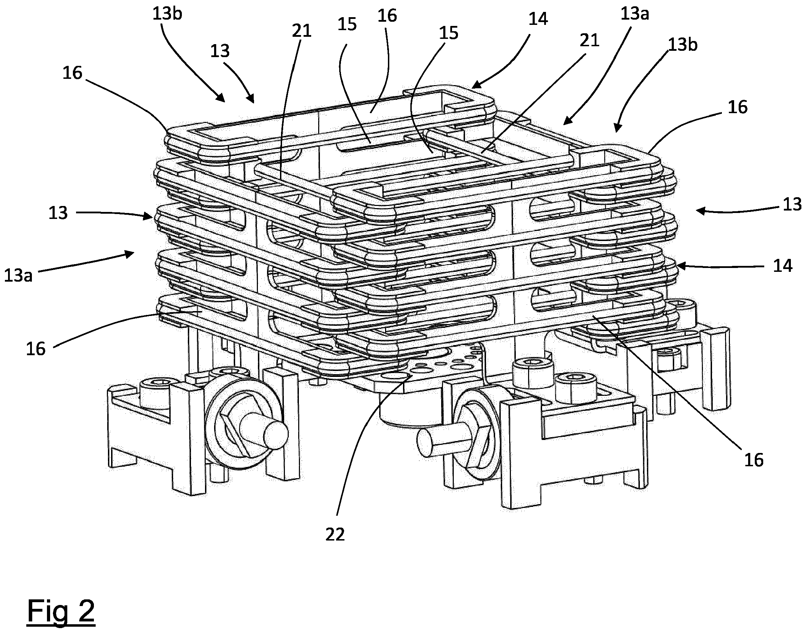

In the advanced position, the restraining bodies 14 of the first pair 13a of holding devices 13 are at least partially received in the separating volumes 15 between the restraining bodies 14 of the second pair 13b of holding devices 13 and the restraining bodies 14 of the second pair 13b of holding devices 13 are at least partially received in the separating volumes 15 between the restraining bodies 14 of the first pair 13a of holding devices 13, as illustrated in Figures 2 and 3.

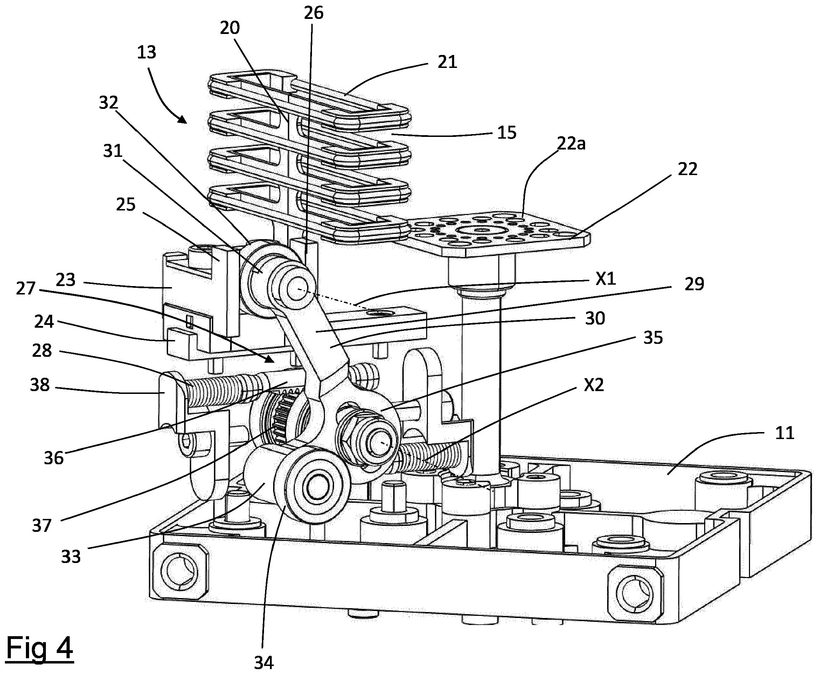

As illustrated in Figure 4, each holding device 13 comprises a slide 23 slidingly coupled to a rail 24. The rail 24 is a straight rail arranged parallel to the respective gripping direction D1, D2 of the holding device 13.

The restraining bodies 14 of the holding device 13 are rigidly connected to the slide 23 through the strut 20. For example, the strut 20 is bolted to the slide 23.

The slide 23 comprises a first shoulder 25 and a second shoulder 26 spaced apart from each other and projecting vertically.

A driving device 27 acts on the slide 23 and is configured to move the slide 23 along the rail 24.

The driving device 27 comprises a pusher 28 and an actuator 29. The pusher 28 and the actuator 29 are mounted on the supporting frame 11.

The pusher 28 is configured to generate a permanent thrust force on the slide 23 to push it towards the advanced position while the actuator 29 is configured to transfer a temporary dragging force on the slide directed in the opposite direction to the thrust force generated by the pusher 28.

When the dragging force has an intensity greater than the intensity of the thrust force, the slide 23 slides towards the retracted position until it reaches a position of maximum retraction, while when the dragging force has a lower intensity (or is not generated), the slide 23 slides towards the advanced position until it reaches a position of maximum advancement.

In the embodiment illustrated in Figure 4, the actuator 29 is further configured to transfer to the slide 23 the thrust force exerted by the pusher 28.

The actuator 29 comprises a dragging portion 30 provided, at a first end, with a slider 31. The slider 31 is placed between the first shoulder 25 and the second shoulder 26 of the slide 23. The slider 31 comprises a rolling bearing or a wheel 32 in contact with both the first shoulder 25 and the second shoulder 26 and rotatable with respect to the dragging portion 30 about a rolling axis X1.

The actuator 29 comprises an actuation portion 33 on which an external force can be exerted by an operator or by a pushing device external to the equipment 10. The application of this external force generates the cited actuation force. At a first end of the actuation portion 33 there is a rolling bearing or a wheel 34 configured to receive said actuation force.

The actuator 29 comprises, interposed between the actuation portion 33 and the dragging portion 30, a transmission portion 35. The transmission portion 35 is connected to respective second ends of the actuation portion 33 and of the dragging portion 30. The transmission portion 35 is configured to transfer the actuation force towards the dragging portion 30 allowing the latter to exert the dragging force on the slide 23.

The transmission portion 35 is hinged around a rotation axis X2 in order to be able to rotate and put the dragging portion 30 in rotation. The first end of the actuation portion 33, at which the external force is applied, is spaced apart from the rotation axis X2, such that the application of the external force causes a rotation in a first angular direction of the actuation portion 33 and of the transmission portion 35 about the rotation axis X2. This rotation of the transmission portion 35 causes a rotation, in the same angular direction, of the dragging portion 30 and a thrust of the slider 31 on the first shoulder 25 of the slide 23. The rotation axis X2 and the rolling axis X1 are parallel and spaced apart.

As illustrated in Figure 4, the actuation portion 33, the dragging portion 30 and the one transmission portion 35 of the actuator 29 together define an L-shaped body, with the first end of the actuation portion and the first end of the dragging portion 30 being placed at the free ends of said L-shaped body.

The pusher 28 is mounted at one end of a rack 36 geared to a gear wheel 37. The rack 36 is parallel to the rail 24 and the gear wheel 37 is rotatable about the rotation axis X2. A translation of the rack 36 causes a rotation of the gear wheel 37 and a rotation of the gear wheel 37 causes a translation of the rack 36. A rotation in the first angular direction of the gear wheel 37 about the rotation axis X2 corresponds to a translation of the rack 36 in the direction of the retracted position of the holding device 13. A rotation in a second angular direction (opposite the first angular direction) of the gear wheel 37 about the rotation axis X2 corresponds to a translation of the rack 36 in the direction of the advanced position of the holding device 13.

The gear wheel 37 is further rotatably constrained to the transmission portion 35 of the actuator 29, for example the transmission portion 35 is bolted to the gear wheel 37.

A rotation of the transmission portion 35 causes a translation of the rack 36 and a translation of the rack 36 causes a rotation of the transmission portion 35. A rotation in the first angular direction of the transmission portion 35 about the rotation axis X2 corresponds to a translation of the rack 36 in the direction of the retracted position of the holding device 13 and in opposition to the thrust force exerted by the pusher 28. A translation of the rack 36 in the direction of the advanced position of the holding device 13, actuated by the thrust force of the pusher 28, corresponds to a rotation in a second angular direction (opposite the first angular direction) of the transmission portion 35 about the rotation axis X2. Such rotation in the second angular direction of the transmission portion 35 is only actuatable when no external force is exerted on the actuator 29 or when the thrust force is greater than the external force.

The thrust force generated by the pusher 28 is thus transferred to the slide 23 through the transmission portion 35 of the actuator 29 which, through the slider 31 pushes against the second shoulder 26 of the slide 23.

The pusher 28 may be a linear spring or an elastomer placed between the rack 36 and an abutment shoulder 38.

In order place a container in the equipment 10, the operator picks up an equipment 10 from the track of the path of the automated production line or from a storage unit.

The equipment 10 is with the holding devices 13 in the advanced position and in particular of maximum advancement due to the thrust force exerted by the respective pushing elements 28 on the respective slides 23. In this condition, the holding devices 13 are arranged with the restraining bodies 14 of the first pair 13a of holding devices 13 being at least partially received in the separating volumes 15 between the restraining bodies 14 of the second pair 13b of holding devices 13 and with the restraining bodies 14 of the second pair 13b of holding devices 13 being at least partially received in the separating volumes 15 between the restraining bodies 14 of the first pair 13a of holding devices 13.

The operator (or an external pushing device actuated by the operator) exerts the cited external forces on the actuation portions 33 of the actuators 29 in such a way as to generate dragging forces of an intensity greater than the intensity of the thrust force. The slides 23, and along with them the holding devices 13, slide towards the respective retracted positions.

The external forces are applied in such a way as to move the holding devices 13 away from each other by distances greater than the maximum extent of the container in a horizontal direction, to allow inserting the container to be transported between the holding devices 13 and resting on the support base 22.

Depending on the sizes of the container, the holding devices 13 may be in one of the following two configurations:
in the configuration illustrated in Figures 2 and 3, that is, with the restraining bodies 14 of the first pair 13a of holding devices 13 being at least partially received in the separating volumes 15 between the restraining bodies 14 of the second pair 13b of holding devices 13 and with the restraining bodies 14 of the second pair 13b of holding devices 13 being at least partially received in the separating volumes 15 between the restraining bodies 14 of the first pair 13a of holding devices 13;
in the configuration illustrated in Figure 1, i.e. with the restraining bodies 14 not inserted in the separating volumes.

The operator places the container on the support base 22 and removes the external force on the actuation portions 33 of the actuators 29.

Due to the thrust force exerted by the respective pushers 28 on the respective slides 23, the holding devices 13 advance along the respective gripping directions towards the respective advanced positions.

During the advancement of the holding devices 13, the contact element 21 of each restraining body 14 presses against the outer surface of the container. The contact elements 21 together with the support base 22 are the only components of the equipment 10 that come into contact with the container. Each contact element 21 is deformed to adapt to the shape of the outer surface portion of the contacted container and, through the corresponding front opening 19 onto which it is placed, is deformed in the direction of the rear portion 17 of the supporting element 16.

In this way, the container is stably held on the support base 22 and between the holding devices 13. The holding of the container is not absolute, i.e. the container is slightly movable on the support base 22 due to the resilient deformability of the contact elements 21. This allows, for example, to be able to subject the container to operations that require a minimum displacement of the container for them to be carried out correctly, such as the application of a cap or of a screw closure on the neck of the container.

According to the sizes of the container, the holding devices 13 may be in one of the following two configurations:
in the configuration illustrated in Figures 2 and 3, that is, with the restraining bodies 14 of the first pair 13a of holding devices 13 being at least partially received in the separating volumes 15 between the restraining bodies 14 of the second pair 13b of holding devices 13 and with the restraining bodies 14 of the second pair 13b of holding devices 13 being at least partially received in the separating volumes 15 between the restraining bodies 14 of the first pair 13a of holding devices 13;
in the configuration illustrated in Figure 1, i.e. with the restraining bodies 14 not inserted in the separating volumes.

In any case, whether the container is relatively large-sized or the container is small-sized, the contact elements 21 always contact the outer surface of the container.

## Claims

1. Conveying equipment (10) for holding and transporting a container, comprising:
a support base (22) for a container;
holding devices (13) movable along respective gripping directions (D1, D2) between a retracted position and an advanced position;
wherein each holding device (13) comprises a plurality of restraining bodies (14) placed one above the other, wherein each restraining body (14) of a respective holding device (13) is separated from an underlying restraining body (14) by a separating volume (15);
wherein each restraining body (14) comprises a contact element (21) adapted to be resiliently deformed and configured to conform at least partially to a portion of the outer surface of a container;
wherein the restraining bodies (14) of a first holding device (13) of said holding devices (13) are at least partially received, at least in the respective advanced position, in respective separating volumes (15) of a second holding device (13) of said holding devices (13).

2. Conveying equipment (10) according to claim 1, wherein the restraining bodies (14) of the holding devices (13) are arranged parallel to each other.

3. Conveying equipment (10) according to claim 1 or 2, wherein each restraining body (14) comprises a rigid supporting element (16) to which a respective contact element is stably connected (21).

4. Conveying equipment (10) according to claim 3, wherein the rigid supporting elements (16) of each restraining body (14) are connected to each other by a strut (20); each strut (20) being constrained to a rear portion (17) of each respective rigid supporting element (16).

5. Conveying equipment (10) according to any one of the preceding claims, wherein each contact element (21) of the restraining bodies (14) comprises an elastic strip.

6. Conveying equipment (10) according to claim 3, wherein each rigid supporting element (16) comprises a rear portion (17) and two side portions (18) connected to the rear portion (17) and delimiting a front opening (19) for the rigid supporting element (16); the contact element (21) being connected to said side portions (18) and extending at the front opening (19).

7. Conveying equipment (10) according to claim 6, wherein each contact element (21) is wrapped in a closed loop around the rear portion (17) and the side portions (18) of a respective rigid supporting element (16).

8. Conveying equipment (10) according to any one of the preceding claims, wherein said holding devices (13) comprise a first pair (13a) of holding devices (13) movable along a first gripping direction (D1) and a second pair (13b) of holding devices (13) movable along a second gripping direction (D2).

9. Conveying equipment (10) according to claim 8, wherein restraining bodies (14) of the first pair (13a) of holding devices (13) are received at least partially, at least in the respective advanced position, in separating volumes (15) of the second pair (13b) of holding devices (13) and wherein restraining bodies (14) of the second pair (13b) of holding devices (13) are received at least partially, at least in the respective advanced position, in separating volumes (15) of the first pair (13a) of holding devices (13).

10. Conveying equipment (10) according to claim 8 or 9, wherein the holding devices (13) of the first pair (13a) of holding devices (13) are arranged symmetrically with respect to said support base (22) and wherein the holding devices (13) of the second pair (13b) of holding devices (13) are arranged symmetrically with respect to said support base (22).

11. Conveying equipment (10) according to any one of the preceding claims, wherein each holding device (13) comprises a slide (23) slidingly mounted on a rail (24) for moving along the respective gripping direction (D1, D2).

12. Conveying equipment (10) according to claim 11, wherein for each holding device (13), the equipment (10) comprises a driving device (27) active on said slide (23) for moving the slide (23) along said rail (24).

13. Conveying equipment (10) according to claim 12, wherein each driving device (27) comprises a pusher (28) configured to permanently generate a thrust force on said slide (23) directed towards the advanced position of the respective holding device (13).

14. Conveying equipment (10) according to claim 13, wherein said driving device (27) comprises an actuator (29) comprising a dragging portion (30) connected to the slide (23) to transmit to the slide (23) a dragging force directed towards the retracted position of the holding device (13), an actuation portion (33) configured to receive an actuation force, and a transmission portion (35) configured to transfer the actuation force to the dragging portion (30) and generate said dragging force.

15. Conveying equipment (10) according to claim 14, wherein said transmission portion (35) of the driving body is connected to said pusher (28) in such a way as to transmit the actuation force to the dragging portion (30) in contrast to the thrust force generated by said pusher (28).
